# EUROPÄISCHE PATENTSCHRIFT

(11) **EP 1 899 746 B1**
(45) Veröffentlichungstag und Bekanntmachung des Hinweises auf die Patenterteilung: **24.03.2010**
(21) Anmeldenummer: 06753507.0
(22) Anmeldetag: 06.05.2006
(51) Int. Cl.: G01S 15/93, G01S 13/93, B60Q 1/48, G01S 7/527

(54) **VERFAHREN ZUR VERMESSUNG EINER PARKLÜCKE UND ZUM ERKENNEN VON HINDERNISSEN BEIM EINPARKVORGANG EINES FAHRZEUGES SOWIE ZUGEHÖRIGES MESSSYSTEM**
METHOD FOR MEASURING A PARKING SPACE AND DETECTING OBSTACLES DURING THE PARKING PROCESS OF A VEHICLE, AND ASSOCIATED MEASURING SYSTEM
PROCEDE POUR MESURER UNE PLACE DE STATIONNEMENT ET POUR DETECTER DES OBSTACLES LORS DU PROCESSUS DE STATIONNEMENT D'UN VEHICULE ET SYSTEME DE MESURE ASSOCIE

(30) Priorität: 04.07.2005 DE 102005032485
(43) Veröffentlichungstag der Anmeldung: 19.03.2008
(73) Patentinhaber: Valeo Schalter und Sensoren GmbH, 74321 Bietigheim-Bissingen (DE)
(72) Erfinder: GRIMM, Oliver, 74223 Flein (DE); JECKER, Nicolas, 73728 Esslingen (DE)
(74) Vertreter: Pothmann, Karsten
(86) Internationale Anmeldenummer: PCT/EP2006/004249
(87) Internationale Veröffentlichungsnummer: WO 2007/003242

(56) Entgegenhaltungen:
- DE-A1- 4 335 728
- DE-A1- 10 206 764
- DE-A1- 10 343 175

## Beschreibung

Die Erfindung betrifft ein Verfahren zur Vermessung einer Parklücke und zum Erkennen von Hindernissen beim Einparkvorgang eines Fahrzeuges sowie ein Messsystem hierfür.

Aus dem Stand der Technik sind Verfahren zur Vermessung einer Parklücke bekannt, bei denen eine Parklücke mittels Ultraschallsensoren vermessen werden. Derartige Sensoren sind in der Regel seitlich am Fahrzeug angeordnet und erfassen einen senkrecht zur Längsachse des Fahrzeugs verlaufenden Bereich seitlich neben dem Fahrzeug. Beim Vermessen der Parklücke werden die Lückensensoren im Lückenvermessungsmodus betrieben, bei dem das Fahrzeug eine vergleichsweise hohe Geschwindigkeit, bis zu 30 km/h haben kann. Aufgrund der höheren Geschwindigkeit erfolgt die Messung in kürzeren Messzyklen. Das Messergebnis wird hierdurch insgesamt vergleichsweise ungenau.

Aus dem Stand der Technik sind auch Verfahren zum Erkennen von Hindernissen beim Einparkvorgang eines Fahrzeugs bekannt. Derartige Verfahren benutzen zur Hinderniserkennung einen Ultraschallsensor, der in der Regel an der Vorder- und/oder Rückseite des Fahrzeugs und/oder im Eckbereich des Fahrzeugs angeordnet ist. Während des Einparkvorganges wird der entsprechende Ultraschallsensor in einem Einparkmodus angesteuert, in dem aufgrund der vergleichsweise geringen Geschwindigkeit des Fahrzeugs beim Einparken eine vergleichsweise genaue Messung mit längeren Messzyklen erfolgt. Die Technik der Hinderniserkennung beim Einparken ist schon seit mehreren Jahren bekannt und vergleichsweise ausgereift. So bestehen für das Betreiben von Hindernissensoren Störschallerkennungsmöglichkeiten, mit denen vorhandener Störschall identifiziert werden kann. Als Quellen von Störschall kommen insbesondere in Betracht: Starker Niederschlag, Vibrationen durch andere Fahrzeuge wie Kehrmaschinen oder Motorräder, Auspuffgeräusche oder dergleichen.

Aus der DE 102 06 764 ist ein Verfahren zum Einparken eines Fahrzeugs bekannt, wobei die Abstände des Fahrzeugs zu Hindernisse von einer Vielzahl von Ultraschallsensoren ermittelt werden, welche an der Frontseite, der Rückseite und der linken und rechten Seiten des Fahrzeugs angeordnet sein können. Dadurch kann der Fahrer sowohl bei der Vorbeifahrt auf geeignete Parklücken hingewiesen werden, als auch beim Einparkvorgang vor Zusammenstößen mit Hindernissen gewarnt werden.

Der vorliegenden Erfindung liegt die Aufgabe zugrunde, ein eingangs genanntes Verfahren bereitzustellen, bei dem im Lückenvermessungsmodus auf einfache Art und Weise Störschall erkannt werden kann.

Diese Aufgabe wird gelöst durch ein Verfahren zur Vermessung einer Parklücke und zum Erkennen von Hindernissen beim Einparkvorgang eines Fahrzeugs, mit wenigstens einem in einem Lückenvermessungsmodus ansteuerbaren Ultraschall-Lückensensor zum Vermessen einer Parklücke beim Passieren der Parklücke und mit wenigstens einem weiteren in einem zum Lückenvermessungsmodus unterschiedlichen Einparkmodus ansteuerbaren Ultraschall-Hindernissensor zur Hinderniserkennung während des Einparkvorgangs, wobei im Lückenvermessungsmodus der Hindernissensor Ultraschallsignale empfängt, die für eine Störschallerkennung ausgewertet werden.

Das erfindungsgemäße Verfahren hat den Vorteil, dass die ausgereifte Technik der Hinderniserkennung beim Einparkvorgang herangezogen wird, um Störschall im Lückenvermessungsmodus zu erkennen. Dazu werden Hindernissensoren, die beim Lückenvermessungsmodus nicht benötigt werden, weil sie nicht in Richtung der zu vermessenden Parklücke weisen, verwendet, um Störschallsignale zu empfangen, die dann für eine Störschallerkennung während des Vermessens einer Parklücke ausgewertet werden können. Im Lückenvermessungsmodus werden folglich nicht nur die Signale des Lückensensors berücksichtigt, sondern auch die empfangenen Ultraschallsignale des wenigstens einen Hindernissensors. Der Hindernissensor wird dabei vorteilhafterweise in seinem Hindernismodus betrieben, so dass die an für sich bekannte und ausgereifte Technik der Störschallerkennung bezüglich des Einparkens auch beim Vermessen der Parklücke verwendet werden kann. Dadurch wird eine eigene Störschallerkennung für den Lückensensor, die auf vom Lückensensor empfangenen Ultraschallsignalen beruht, nicht erforderlich. Die Störschallerkennung erfolgt über Ultraschallsignale, die vom Hindernissensor empfangen werden.

Dabei ist vorteilhaft, wenn im Lückenvermessungsmodus zum einen der Lückensensor während einem Lückenvermessungsmesszyklus Ultraschallsignale versendet und empfängt und zum anderen der Hindernissensor während seines Einparkmesszyklus lediglich Ultraschallsignale empfängt. Der wenigstens eine Hindernissensor "hört" sozusagen die Umgebung ab, während die Parklücke von dem wenigstens einen Lückensensor vermessen wird. Über den mithörenden Hindernissensor und die zugehörige, ausgereifte Auswertung der Signale des Hindernissensors kann folglich Störschall erkannt werden.

Gemäß einer Weiterbildung der Erfindung ist es denkbar, dass im Lückenvermessungsmodus aufgrund einer höheren Fahrgeschwindigkeit, insbesondere bis zirka 30 km/h eine Messung mit kürzeren Messzyklen erfolgt und dass im Einparkmodus aufgrund der geringeren Fahrgeschwindigkeit, die bei Schritttempo liegt, eine Messung mit längeren Messzyklen erfolgt. Aufgrund der höheren Fahrgeschwindigkeit im Lückenvermessungsmodus ist diese Messung nicht so genau, wie die Messung im Einparkmodus. Im Einparkmodus können Hindernisse genauer erkannt werden.

Gemäß der Erfindung ist ferner denkbar, dass vom Hindernissensor erfasster Störschall mittels einer für den Einparkmodus hinterlegten Störschallerkennungslogik erkannt wird. Der Lückensensor hat dann keine eigene Störschallerkennung; Störschall wird ausschließlich über den Hindernissensor und der zugehörigen, hinterlegten Störschallerkennungslogik erkannt.

Gemäß einer Weiterbildung der Erfindung kann vorgesehen sein, dass bei einer Erkennung von Störschall die Parklückenvermessung abgebrochen wird. Insbesondere dann, wenn eine kritische Störschallschwelle überschritten wird, die eine weitere Auswertung der Messergebnisse unmöglich macht, kann vorgesehen werden, dass die Parklückenvermessung abgebrochen wird. Der Fahrzeuglenker erhält dann die Information, dass sein System zum Vermessen der Parklücke nicht mehr korrekt arbeitet. Erfindungsgemäß kann selbstverständlich vorgesehen sein, dass über Filter in geringem Maße auftretender Störschall eliminiert werden kann. Nur dann, wenn der Störschall eine kritische Schwelle überschreitet, kann vorgesehen sein, dass die Parklückenvermessung abgebrochen wird.

Die eingangs genannte Aufgabe wird auch gelöst durch ein Ultraschallmesssystem für ein Fahrzeug zur Vermessung einer Parklücke und zum Erkennen von Hindernissen beim Einparkvorgang, mit einem ersten Steuergerät, mit wenigstens einem seitlich am Fahrzeug angeordneten vom ersten Steuergerät in einem Lückenvermessungsmodus ansteuerbaren Lückensensor zur Vermessung einer Parklücke beim Passieren der Parklücke und mit wenigstens einem weiteren, im Eck-, Front- und/oder Heckbereich angeordneten von einem weiteren oder vom ersten Steuergerät in einem Einparkmodus ansteuerbaren Hindernissensor zur Hinderniserkennung beim Einparkvorgang, wobei das erste Steuergerät im Lückenvermessungsmodus Ausgangssignale des Hindernissensors für eine Störschallerkennung erhält. Aufgrund der ausgereiften Technik zur Erkennung von Störschall im Einparkmodus werden beim Lückenvermessen im Lückenvermessungsmodus Ausgangssignale des Hindernissensors für eine Störschallerkennung berücksichtigt.

Die Störschallerkennung kann dabei im weiteren Steuergerät erfolgen, wobei dann das weitere Steuergerät dem ersten Steuergerät mitteilt, wenn Störschall vorhanden ist. Die bekannte und ausgereifte Hardware und Software für die Hinderniserkennung kann dabei weitgehend beibehalten werden. Bei Auftreten von Störschall wird dies dem ersten Steuergerät mitgeteilt.

Demgegenüber kann erfindungsgemäß auch vorgesehen sein, dass lediglich das erste Steuergerät vorgesehen ist, das im Lückenvermessungsmodus dem wenigstens einen Lückensensor und im Einparkmodus den wenigstens einen Hindernissensor ansteuert. Hierdurch kann Hardware eingespart werden; lediglich ein Steuergerät ist für beide Betriebsmodi verantwortlich.

Gemäß einer Weiterbildung der Erfindung kann vorgesehen sein, dass der wenigstens eine Lückensensor wenigstens weitgehend identisch zum wenigstens einen Hindernissensor ausgebildet ist. Dabei können sämtliche am Fahrzeug vorgesehenen Ultraschallsensoren vom gleichen Typ sein. Durch die Art der Ansteuerung wird unterschieden durch Lückensensoren und Hindernissensoren.

Dabei ist ferner denkbar, dass der Lückensensor auch als Hindernissensor und/oder der Hindernissensor auch als Lückensensor vom jeweiligen Steuergerät ansteuerbar und betreibbar ist. Für die Störschallerkennung ist es allerdings erforderlich, dass wenigstens ein Hindernissensor auch im Lückenvermessungsmodus "mithört", um Störschall zu erkennen.

Ein erfindungsgemäßes Ultraschallmesssystem zeichnet sich auch dadurch aus, dass es zur Ausführung des erfindungsgemäßen Verfahrens vorgesehen ist.

Weitere Einzelheiten und Vorteile der Erfindung sind der nachfolgenden Beschreibung zu entnehmen, in der die Erfindung anhand des in der Zeichnung dargestellten Ausführungsbeispiels näher beschrieben und erläutert ist.

Es zeigen:
- Figur 1: eine schematische Darstellung des erfindungsgemäßen Ultraschallmesssystems; und
- Figur 2 a) bis 2 d): verschiedene Sensorsignale.

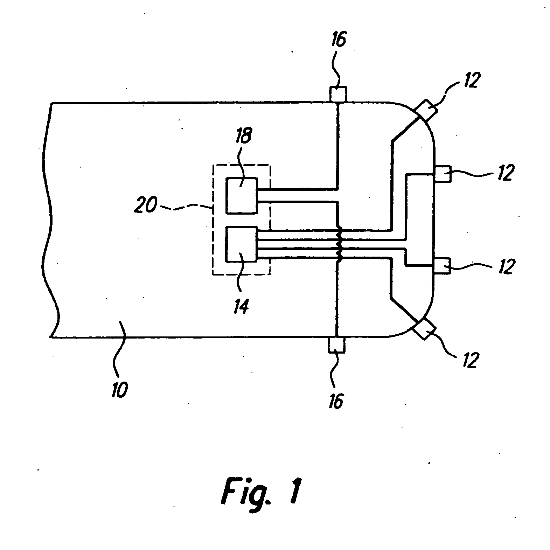

In der Figur 1 ist ein Fahrzeug 10 in Draufsicht schematisch dargestellt, das an seiner vorderen Stirnseite sowie in den Eckbereichen insgesamt vier Ultraschall-Hindernissensoren 12 aufweist. Die vier Hindernissensoren 12 werden beim Einparkvorgang zur Erkennung von Hindernissen von einem Steuergerät 14 angesteuert.

Seitlich am Fahrzeug 10 sind einander gegenüberliegend Ultraschall-Lückensensoren 16 angeordnet, die zur Vermessung einer Parklücke beim Passieren der Parklücke dienen. Die beiden Lückensensoren 16 werden von einem Steuergerät 18 beim Lückenvermessen in einem Lückenvermessungsmodus angesteuert.

Die beiden Steuergeräte 14 und 18 können auch in einem gemeinsamen Steuergerät realisiert sein, das gestrichelt angedeutet ist und das Bezugszeichen 20 aufweist.

Das in der Figur 1 dargestellte Ultraschallmesssystem kann dabei wie folgt funktionieren:
Beim längs Vorbeifahren an einer Parklücke kann über die Lückensensoren 16, die in einem Lückenvermessungsmodus angesteuert werden, festgestellt werden, ob eine Parklücke passiert wird beziehungsweise kann die Länge einer Parklücke bestimmt werden. Im Lückenvermessungsmodus sind aufgrund der höheren Fahrtgeschwindigkeit des Fahrzeugs, die bis 30 km/h betragen kann, die Einzelmesszyklen vergleichsweise kurz; das Messergebnis ist dadurch vergleichsweise ungenau. Wird eine Lücke mit entsprechender Länge detektiert, kann dies dem Fahrzeuglenker mitgeteilt werden. Beim Einstoßen in die Lücke werden dann die Hindernissensoren 12 in einem Einparkmodus betrieben, bei dem Hindernisse beim Einparkvorgang erkannt werden können. Insbesondere wird der Abstand zu vorhandenen Hindernissen erfasst; bei Unterschreiten eines Mindestabstandes kann ein Signal an den Fahrzeuglenker gegeben werden. Die vom Steuergerät 14 angesteuerten Hindernissensoren 12 werden im Einparkmodus mit im Vergleich zum Lückenvermessungsmodus längeren Messzyklen betrieben, da beim Einparken die Fahrgeschwindigkeit kleiner ist als die Fahrgeschwindigkeit beim Lückenvermessen. Insofern ergibt sich ein genaueres Messergebnis im Einparkmodus.

Im Steuergerät 14 beziehungsweise Steuergerät 20 ist eine Störschallerkennungslogik hinterlegt, mit der über die Hindernissensoren 12 erfasster Störschall erkannt werden kann. Das erfindungsgemäße Ultraschallmesssystem zeichnet sich dadurch aus, dass beim Vermessen einer Parklücke mittels den Lückensensoren 16 die Hindernissensoren 12 Ultraschallsignale empfangen, die vom Steuergerät 14 beziehungsweise Steuergerät 20 im Hinblick auf eine Störschallerkennung ausgewertet werden. Insofern ist eine Störschallerkennung für die im Lückenvermessungsmodus betriebenen Lückensensoren 16 nicht erforderlich.

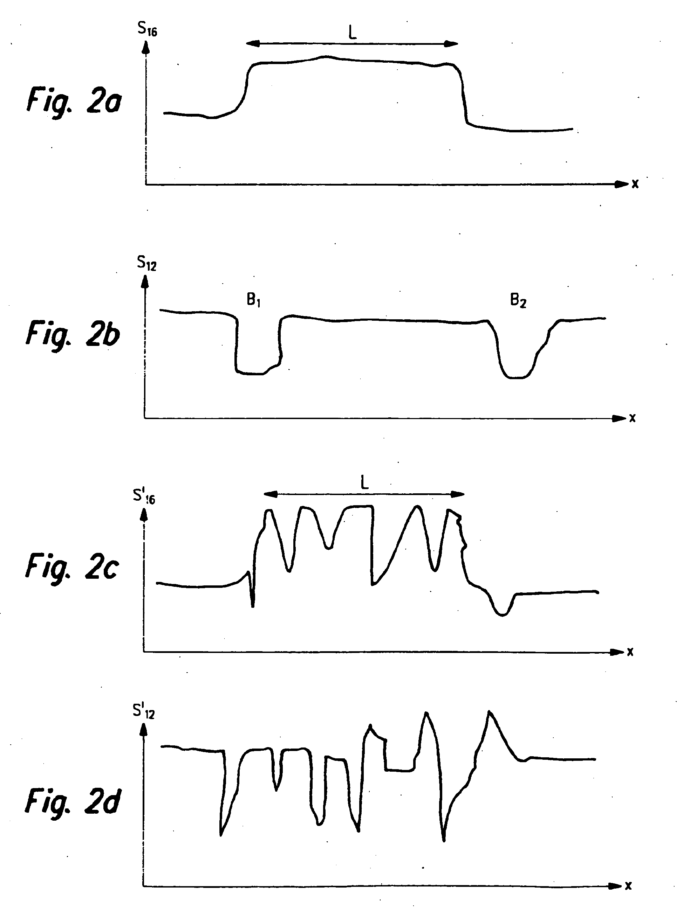

In der Figur 2 a) ist der Signalverlauf S₁₆ eines Lückensensors 16 über den vom Fahrzeug beim Lückenvermessen zurückgelegten Weg x dargestellt. Eine zwischen zwei Hindernissen vorhandene Parklücke L kann im störungsfreien Betrieb erkannt werden.

In der Figur 2 b) ist der Signalverlauf S₁₂ eines im Eckbereich angebrachten Hindernissensors 12 dargestellt, ebenfalls über den vom Fahrzeug zurückgelegten Weg x beim Vermessen der Parklücke. Deutlich zu erkennen sind die beiden Bereiche B₁ und B₂, in denen vom Hindernissensor 12, der im Hinderniserkennungsmodus betrieben wird, der Beginn B₁ und das Ende B₂ der Parklücke erfasst wird.

In der Figur 2 c) ist ein aufgrund von äußeren Einflüssen gestörter Signalverlauf S'₁₆ des Lückensensors 16 dargestellt. Im Bereich der Lücke L ist der Signalverlauf instabil. Vor und hinter der Lücke ist das Signal vergleichsweise stabil, aufgrund den die Lücke begrenzenden, erfassten Hindernissen. Zur Erkennung, ob der instabile Signalverlauf auf einer externen Störschallquelle beruht oder aus undefinierten Gegenständen in der Parklücke resultiert, wird der Signalverlauf S'₁₂ des Sensors 12 gemäß Figur 2 d) herangezogen, die den Signalverlauf des Sensors 12 im Störfall über den Weg x zeigt. Aufgrund einer vorhandenen Störschallerkennungslogik kann festgestellt werden, dass die vom Hindernissensor 12 erfassten unstabilen Daten einer Störschallquelle, beispielsweise einer Kehrmaschine, dichtem Regen oder einem Auspuff, zuzuordnen sind. Über den Hindernissensor 12 kann folglich mit vergleichsweise wenig Aufwand im Lückenvermessungsmodus festgestellt werden, ob Störschallquellen vorhanden sind. Ist dies der Fall, so kann dem Fahrzeuglenker mitgeteilt werden, dass die Lückenvermessung abgebrochen wird, beziehungsweise dass eine Lückenvermessung derzeit nicht möglich ist.

## Patentansprüche

1. Verfahren zur Vermessung einer Parklücke und zum Erkennen von Hindernissen beim Einparkvorgang eines Fahrzeugs;
mit wenigstens einem in einem Lückenvermessungsmodus ansteuerbaren Ultraschall-Lückensensor (16) zum Vermessen einer Parklücke beim Passieren der Parklücke und
mit wenigstens einem weiteren in einem zum Lückenvermessungsmodus unterschiedlichen Einparkmodus ansteuerbaren Ultraschall-Hindernissensor (12) zur Hinderniserkennung während eines Einparkvorgangs,
**dadurch gekennzeichnet, dass** im Lückenvermessungsmodus der Hindernissensor (12) Ultraschallsignale empfängt die für eine Störschallerkennung ausgewertet werden.

2. Verfahren nach Anspruch 1, **dadurch gekennzeichnet, dass** im Lückenvermessungsmodus zum einen der Lückensensor (16) während einem Lückenvermessungsmesszyklus Ultraschallsignale versendet und empfängt und zum anderen der Hindernissensor (12) lediglich Ultraschallsignale empfängt.

3. Verfahren nach Anspruch 1 oder 2, **dadurch gekennzeichnet, dass** im Lückenvermessungsmodus aufgrund einer höheren Fahrgeschwindigkeit eine Messung mit kürzeren Messzyklen erfolgt und dass im Einparkmodus aufgrund der geringeren Fahrgeschwindigkeit eine Messung mit längeren Messzyklen erfolgt.

4. Verfahren nach Anspruch 1, 2 oder 3, **dadurch gekennzeichnet, dass** vom Hindernissensor erfasster Störschall mittels einer für den Einparkmodus hinterlegten Störschallerkennungslogik erkannt wird.

5. Verfahren nach einem der vorhergehenden Ansprüche, **dadurch gekennzeichnet, dass** bei einer Erkennung von Störschall die Parklückenvermessung abgebrochen wird.

6. Ultraschallmesssystem (10) für ein Fahrzeug zur Vermessung einer Parklücke und zum Erkennen von Hindernissen beim Einparkvorgang, mit einem ersten Steuergerät (18),
mit wenigstens einem seitlich am Fahrzeug (10) angeordneten vom ersten Steuergerät (18) in einem Lückenvermessungsmodus ansteuerbaren Lückensensor (16) zum Vermessen einer Parklücke beim Passieren der Parklücke und
mit wenigstens einem weiteren im Eck-, Front- und/oder Heckbereich angeordneten von einem weiteren oder vom ersten Steuergerät (14 oder 18) in einem Einparkmodus ansteuerbaren Hindernissensor (12) zur Hinderniserkennung beim Einparkvorgang,
**dadurch gekennzeichnet, dass** das erste Steuergerät (18) im Lückenvermessungsmodus Ausgangssignale des Hindernissensors (12) für eine Störschallerkennung erhält.

7. Ultraschallmesssystem nach Anspruch 6 mit dem ersten Steuergerät (18) und dem weiteren Steuergerät (14), **dadurch gekennzeichnet, dass** die Störschallerkennung im weiteren Steuergerät (14) erfolgt und dass das weitere Steuergerät (14) dem ersten Steuergerät (18) mitteilet, wenn Störschall vorhanden ist.

8. Ultraschallmesssystem nach Anspruch 6, **dadurch gekennzeichnet, dass** lediglich das erste Steuergerät (18, 20) vorgesehen ist, und dass das erste Steuergerät (18,20) im Lückenvermessungsmodus den wenigstens einen Lückensensor (16) und im Einparkmodus den wenigstens einen Hindernissensor (12) ansteuert.

9. Ultraschallmesssystem nach Anspruch 6, 7 oder 8, **dadurch gekennzeichnet, dass** der wenigstens eine Lückensensor (16) wenigstens weitgehend identisch zum wenigstens einen Hindernissensor (12) ausgebildet ist.

10. Ultraschallmesssystem nach einem der Ansprüche 6 bis 9, **dadurch gekennzeichnet, dass** der Lückensensor als Hindernissensor und/oder der Hindernissensor als Lückensensor vom Steuergerät ansteuerbar und betreibbar ist.

11. Ultraschallmesssystem nach einem der Ansprüche 6 bis 10 zur Ausführung des Verfahrens nach einem der 1 bis 5.

## Claims

1. Method for measuring a parking space and detecting obstacles during the parking process of a vehicle,
with at least one ultrasonic space sensor (16) which can be controlled in a space measuring mode and is intended to measure a parking space when passing the parking space, and
with at least one further ultrasonic obstacle sensor (12) which can be controlled in a parking mode, which is different from the space measuring mode, and is intended to detect obstacles during a parking process,
**characterized in that**, in the space measuring mode, the obstacle sensor (12) receives ultrasonic signals which are evaluated in order to detect interference sound.

2. Method according to Claim 1, **characterized in that**, in the space measuring mode, the space sensor (16) transmits and receives ultrasonic signals during a space measuring cycle, on the one hand, and the obstacle sensor (12) only receives ultrasonic signals, on the other hand.

3. Method according to Claim 1 or 2, **characterized in that**, in the space measuring mode, a measurement with shorter measuring cycles is carried out on account of a higher driving speed, and **in that**, in the parking mode, a measurement with longer measuring cycles is carried out on account of the lower driving speed.

4. Method according to Claim 1, 2 or 3, **characterized in that** interference sound detected by the obstacle sensor is detected using interference sound detection logic stored for the parking mode.

5. Method according to one of the preceding claims,
**characterized in that** the parking space measurement is aborted when interference sound is detected.

6. Ultrasonic measuring system (10) for a vehicle for measuring a parking space and detecting obstacles during the parking process, having a first control device (18),
having at least one space sensor (16) which is arranged on the side of the vehicle (10), can be controlled by the first control device (18) in a space measuring mode and is intended to measure a parking space when passing the parking space, and having at least one further obstacle sensor (12) which is arranged in the corner, at the front and/or at the back, can be controlled by a further control device (14) or by the first control device (18) in a parking mode and is intended to detect obstacles during the parking process,
**characterized in that**, in the space measuring mode, the first control device (18) receives output signals from the obstacle sensor (12) for detecting interference sound.

7. Ultrasonic measuring system according to Claim 6 having the first control device (18) and the further control device (14), **characterized in that** interference sound is detected in the further control device (14), and **in that** the further control device (14) informs the first control device (18) when interference sound is present.

8. Ultrasonic measuring system according to Claim 6, **characterized in that** only the first control device (18, 20) is provided, and **in that** the first control device (18, 20) controls the at least one space sensor (16) in the space measuring mode and controls the at least one obstacle sensor (12) in the parking mode.

9. Ultrasonic measuring system according to Claim 6, 7 or 8, **characterized in that** the at least one space sensor (16) is at least largely identical to the at least one obstacle sensor (12).

10. Ultrasonic measuring system according to one of Claims 6 to 9, **characterized in that** the space sensor can be controlled and operated as an obstacle sensor by the control device and/or the obstacle sensor can be controlled and operated as a space sensor by the control device.

11. Ultrasonic measuring system according to one of Claims 6 to 10 for carrying out the method according to one of Claims 1 to 5.

## Revendications

1. Procédé pour mesurer un espace de stationnement et pour détecter des obstacles lors d'une manoeuvre de stationnement d'un véhicule, comprenant au moins un détecteur d'espace à ultrasons (16) qui peut être commandé dans un mode de mesure d'espace afin de mesurer un espace de stationnement lors du passage à côté de l'espace de stationnement, et comprenant au moins un détecteur d'obstacle à ultrasons (12) supplémentaire qui peut être commandé dans un mode de stationnement différent du mode de mesure d'espace afin de détecter les obstacles pendant une manoeuvre de stationnement, **caractérisé en ce qu'**en mode de mesure d'espace, le détecteur d'obstacle (12) reçoit des signaux ultrasoniques qui sont interprétés pour une détection de bruit parasite.

2. Procédé selon la revendication 1, **caractérisé en ce qu'**en mode de mesure d'espace, d'une part le détecteur d'espace (16) émet et reçoit des signaux ultrasoniques pendant un cycle de mesure d'espace et d'autre part le détecteur d'obstacle (12) reçoit seulement des signaux ultrasoniques.

3. Procédé selon la revendication 1 ou 2, **caractérisé en ce qu'**en mode de mesure d'espace, une mesure est effectuée avec des cycles de mesure plus courts en raison d'une vitesse de déplacement plus élevée et qu'en mode de stationnement, une mesure est effectuée avec des cycles de mesure plus longs en raison de la vitesse de déplacement plus lente.

4. Procédé selon la revendication 1, 2 ou 3, **caractérisé en ce que** le bruit parasite détecté par le détecteur d'obstacle est reconnu au moyen d'une logique de reconnaissance de bruit parasite stockée en mémoire pour le mode de stationnement.

5. Procédé selon l'une des revendications précédentes, **caractérisé en ce que** la mesure de l'espace de stationnement est interrompue en cas de détection d'un bruit parasite.

6. Système de mesure à ultrasons (10) pour un véhicule pour mesurer un espace de stationnement et pour détecter des obstacles lors d'une manoeuvre de stationnement, comprenant un premier module de commande (18), comprenant au moins un détecteur d'espace (16) disposé sur le côté du véhicule (10) et qui peut être commandé dans un mode de mesure d'espace par le premier module de commande (18) afin de mesurer un espace de stationnement lors du passage à côté de l'espace de stationnement, et comprenant au moins un détecteur d'obstacle (12) supplémentaire disposé dans la zone du coin, à l'avant et/ou à l'arrière et qui peut être commandé dans un mode de stationnement par un module de commande (14 ou 18) supplémentaire ou par le premier afin de détecter les obstacles lors d'une manoeuvre de stationnement, **caractérisé en ce qu'**en mode de mesure d'espace, le premier module de commande (18) reçoit les signaux de sortie du détecteur d'obstacle (12) pour une détection de bruit parasite.

7. Système de mesure à ultrasons selon la revendication 6 comprenant le premier module de commande (18) et le module de commande supplémentaire (14), **caractérisé en ce que** la détection de bruit parasite s'effectue dans le module de commande supplémentaire (14) et que le module de commande supplémentaire (14) communique au premier module de commande (18) la présence du bruit parasite.

8. Système de mesure à ultrasons selon la revendication 6, **caractérisé en ce que** seul le premier module de commande (18, 20) est prévu et que le premier module de commande (18, 20), en mode de mesure d'espace, commande l'au moins un détecteur d'espace (16) et, en mode de stationnement, commande l'au moins un détecteur d'obstacle (12).

9. Système de mesure à ultrasons selon la revendication 6, 7 ou 8, **caractérisé en ce que** l'au moins un détecteur d'espace (16) est au moins sensiblement réalisé à l'identique de l'au moins un détecteur d'obstacle (12).

10. Système de mesure à ultrasons selon l'une des revendications 6 à 9, **caractérisé en ce que** le détecteur d'espace peut être commandé et utilisé par le module de commande en tant que détecteur d'obstacle et/ou le détecteur d'obstacle en tant que détecteur d'espace.

11. Système de mesure à ultrasons selon l'une des revendications 6 à 10 pour mettre en oeuvre le procédé selon l'une des revendications 1 à 5.
